# EUROPÄISCHE PATENTSCHRIFT

(11) **EP 2 807 929 B1**
(45) Veröffentlichungstag und Bekanntmachung des Hinweises auf die Patenterteilung: **16.08.2017**
(21) Anmeldenummer: 14176916.6
(22) Anmeldetag: 19.10.2007
(51) Int. Cl.: A23C 9/133, A23C 9/156, A23C 3/00, A23C 17/00, A23L 19/00, A23L 27/00, A23L 5/43, A23B 7/005

(54) **Verfahren zur Herstellung eines Milchmischproduktes enthaltend eine Fruchtzubereitung**
Method for the production dairy product comprising a fruit preparation
Procédé de fabrication d'une préparation laitier contenant une préparation de fruit

(30) Priorität: 19.10.2006 AT 17502006; 14.06.2007 AT 9272007
(43) Veröffentlichungstag der Anmeldung: 03.12.2014
(62) Teilanmeldung aus: 07819148.3
(73) Patentinhaber: Infruits Entwicklungs- und Produktions GmbH, 8330 Feldbach (AT)
(72) Erfinder: Jeindl, Matthias, 8262 ILZ (AT)
(74) Vertreter: Puchberger & Partner Patentanwälte

(56) Entgegenhaltungen:
- DE-A1- 3 719 526
- US-A- 5 017 387
- US-A- 5 820 903
- US-A1- 2003 194 468
- TETRA PAK PROCESSING: "Fruchtzubereitungen", , 6. April 2005 (2005-04-06), Seiten 1-2, XP002470618, Gefunden im Internet: URL:http://web.archive.org/web/20050406130 030/http://www.tetrapak-processing.de/gesc haeftsbereiche/fruchtzubereitungen.html [gefunden am 2008-01-09]
- DATABASE FSTA [Online] INTERNATIONAL FOOD INFORMATION SERVICE (IFIS), FRANkFURT-MAIN, DE; HANSEN R: "Pasteurized fruit preparations in containers for dairies.", XP002470619, Database accession no. 75-4-10-p2278 & NORDEUROPAEISK MEJERI-TIDSSKRIFT, Bd. 41, Nr. 2, 1975, Seite 63,
- PLATE J: "Hohe Produktschonung. Fruchtzubereitungen: kontinuierlich hergestellt und aseptisch verpackt Fruit preparations: produced continuously and packed aseptically", LEBENSMITTELTECHNIK, HAMBURG, DE, Bd. 29, Nr. 10, 1997, Seite 25, XP009094339, ISSN: 0047-4290

## Beschreibung

Die Erfindung betrifft ein Verfahren zur Herstellung eines Milchmischproduktes umfassend eine Milchgrundmasse und eine Fruchtzubereitung, welche mindestens drei Komponenten A, B und C umfasst.

Das bisher bekannte und weit verbreitete Verfahren zur Produktion von Fruchtzubereitungen umfasst im Wesentlichen folgende Bestandteile und Schritte:
- Tiefgefrorene oder aseptische Früchte, Saftkonzentrate, Zucker und/oder Stärkehydrolysate, teilweise Puffersalze und Wasser werden vermischt. Bei Diät-Produkten wird Zucker und/oder die Stärkehydrolysate beispielsweise durch Aspartam ersetzt. Des weiteren werden fallweise Fruchthärtungsprozesse durch Zugabe von Ca-Salzen und Enzymen, die über das fruchteigene Pektin eine Festigung erwirken, erreicht.
- Während des Mischprozesses wird die Mischung schonend erwärmt, wobei im Falle von Enzymierungen die Temperatur für einige Minuten bei etwa 30-50°C gehalten wird.
- Danach erfolgt die Zugabe von Stabilisatoren bei ca. 60 °C. Als mögliche Stabilisatoren kommen vielfältig Verschiedene zum Einsatz, bei den meisten Fällen modifizierte Stärken, wie beispielsweise Stärke E 1442 oder E 1422.
- Das Gemisch wird weiter auf etwa 95 °C erhitzt, der Kochkessel geschlossen und das Gemisch wird für ca. 10 min. heißt gehalten.
- Es erfolgt eine Abkühlung, meistens durch Vakuum-Kühlverfahren auf etwa 60 °C.
- Färbende Lebensmittel und Aromen, sowie teilweise auch Puffersalze werden separat flashpasteurisiert und in die auf ca. 40-60 °C abgekühlte Fruchtzubereitung mittels Dampfstoß eingebracht.
- Die Gesamtmischung wird auf 25 bis 40 °C abgekühlt.
- Es folgt eine kaltaseptische Abfüllung in gereinigte und sterile Edelstahlcontainer.

Gattungsgemäße Verfahren zur Herstellung von Milchmischprodukten mit derartigen Fruchtzubereitungen sind aus den Druckschriften US 5,017,387 A sowie US 5,820,903 A bekannt. Anlagen zur aseptischen Herstellung von Fruchtzubereitungen sind ebenfalls aus dem Stand der Technik bekannt.

Bei den bisher bekannten Verfahren ergeben sich vielseitige Probleme, was wirtschaftliche Aspekte, Arbeitsaufwand sowie Transportkosten betrifft. Zum einen ergibt sich ein hoher Kosten- und Geräteaufwand bei der Herstellung, da die Bestandteile, die in niedrigerer Konzentration in der Fruchtzubereitung vorliegen, gemeinsam mit den Bestandteilen wie Zucker und Wasser, welche einen Großteil der Fruchtzubereitung ausmachen, gemeinsam behandelt werden. Das gleiche Problem ergibt sich auch beim Transport, bei dem die fertige Fruchtzubereitung zur Weiterverarbeitung transportiert werden muss. Ein erhöhter Arbeitsaufwand besteht des weiteren darin, dass spezielle Rezepturen für unterschiedliche Kundenwünsche jeweils nur für den kompletten Herstellungsprozess der Fruchtzubereitung berücksichtigt werden können und somit für jede Rezeptur eine komplette Anlage praktisch blockiert ist.

Es ist somit Aufgabe der vorliegenden Erfindung, ein Verfahren zu schaffen, bei dem die oben genannten Nachteile beseitigt werden, der Arbeitsaufwand minimiert wird, die Produktions- und Transportkosten herabgesetzt werden sowie Kundenwünsche, wie spezielle Rezepturen flexibel berücksichtigt werden können.

Diese Aufgabe wird dadurch gelöst, dass ein Verfahren zur Herstellung einer Fruchtzubereitung sowie eine Fruchtzubereitung geschaffen wird, welche mindestens drei Komponenten A, B und C umfasst, wobei
Komponente A hergestellt wird aus mindestens den Bestandteilen:
- Frische Früchte,
- geringfügige Anteile von Wasser,
- gegebenenfalls Zucker oder Stärkehydrolysate,
- gegebenenfalls Ca-Salze und Enzyme zur Fruchthärtung,
- gegebenenfalls Stabilisatoren
Komponente B hergestellt wird aus mindestens den Bestandteilen:
- natürliche oder naturidente Aromen, gegebenenfalls From-The-Native-Fruit-(FTNF)-Aromen,
- Wasser als Lösungsmittel und Trägerstoff,
   sowie zumindest einem weiteren Bestandteil ausgewählt aus der Gruppe: färbende Lebensmittel und oder Lebensmittelfarbstoffe, Puffersalze, Stabilisatoren, Saftkonzentrate, verschiedene Zuckerarten als Trägerstoff, andere Süßstoffe, wie beispielsweise Aspartam, Acesulfam
und Komponente C hergestellt wird aus mindestens den Bestandteilen:
- Wasser,
- Zuckerarten oder Süßstoffen,
- gegebenenfalls Stabilisatoren.

Als Lebensmittelfarbstoff in Komponente B kann beispielsweise Carminsäure, als färbendes Lebensmittel beispielsweise Rote Beete Konzentrat, Schwarzes Karottensaftkonzentrat und als Puffersalz in Komponente B beispielsweise Trinatriumcitrat und/oder Zitronensäure verwendet werden.

Der Fruchtanteil von Komponente A beträgt vorzugsweise mind. 80 Gew.%.

Die drei Komponenten A, B und C werden wie folgt hergestellt, wobei der wesentliche Vorteil darin besteht, dass die Komponente C direkt beim jeweiligen Kunden verarbeitet werden kann und somit der logistische Aufwand sowie die Transportkosten gesenkt werden können.

Die Komponente A wird hergestellt, indem frische Früchte in kontinuierlichen Verfahren unter Zusatz von wenig Wasser, eventuell Zucker oder Stärkehydrolysaten bei 80 bis 98 °C pasteurisiert werden. Weiters werden bereits die oben beschriebenen Fruchthärtungstechnologien mit Ca-Salzen und Enzymen angewendet, mit deutlich besserem Erfolg als mit der tiefgefrorenen Frucht im herkömmlichen Verfahren. Eine leichte Stabilisierung wäre auch durchführbar. Die zugesetzte Wassermenge soll möglichst klein sein, um die Gesamtmenge dieser Komponente A klein zu halten. Die Wassermenge soll aber groß genug sein, um die Verarbeitung und Durchmischung bzw. Lösung der Bestandteile zu ermöglichen.

Es folgt eine Kühlung über beispielsweise Schabewärmetauscher oder Röhrenkühler und anschließend die Abfüllung in aseptische Beutel bei der Temperatur von 20 bis 40 °C je nach Frucht. Bei roten Früchten (Erdbeeren, Himbeeren, Kirschen, ...) ist gerade die möglichst tiefe Abfülltemperatur zur Farberhaltung entscheidend.

Die Komponente B wird aus folgenden Bestandteilen hergestellt:
- Natürliche oder naturidente Aromen, gegebenenfalls FTNF-Aromen
- Wasser als Lösungsmittel und Trägerstoff, sowie zumindest ein weiterer Bestandteil ausgewählt aus der Gruppe:
- Färbende Lebensmittel, die je nach Rezeptur notwendig sein können, insbesondere bei roten Früchten, z.B. Rote Beetessaftkonzentrat, Schwarzes Karottensaftkonzentrat, Holundersaftkonzentrat oder Traubenschalenextrakt bzw. -pulver, Lebensmittelfarbstoffe wie z. B. Carminsäure oder Curcuma, Puffersalze (meist Trinatriumcitrat und Zitronensäure), Saftkonzentrate, Zucker und Zuckerarten als Trägerstoff, bei Diätprodukten Aspartam, Acesulfam oder andere Süßstoffe. Als Stabilisatoren können zB modifizierte Stärke, Johannisbrotkernmehl, Guarkernmehl, Xanthan oder andere im Lebensmittelbereich gängige Stabilisatoren oder Mischungen davon eingesetzt werden.

Die Zutaten werden sehr schonend erwärmt, fallweise homogenisiert, bei 75 bis 95 °C, bevorzugt bei etwa 85 °C pasteurisiert, gekühlt auf < 25 °C und kaltaseptisch abgefüllt beispielsweise in eine Bag in Box.

Charakteristisch für die Komponente B, auch Compound genannt, ist die hohe Konzentration der Zutaten. Die gesamte Komponente wird mit einer Dosierungsbandbreite von mindestens 0,1 % bis maximal 1 % (umgerechnet für das fertige Endprodukt wie z.B. ein Molkereiprodukt) angewendet.

Der Endhersteller wie beispielsweise eine Molkerei führt die Komponenten A und B unter Zugabe von Komponente C zur fertigen Fruchtzubereitung zusammen. Das Zusammenführen erfolgt nach folgendem Schema:
- Komponente A (aseptische Früchte) wird mit Komponente C, nämlich Zucker (ausgenommen Diätprodukte), Zuckerarten und Wasser vermischt und schonend erhitzt,
- Zugabe von Stabilisatoren bei ca. 60 °C (meist Stärke E 1422),
- Erhitzen auf 80-99 °C, bevorzugt bei ca. 85 °C,
- Heißhalten auf Pasteurisationstemperatur bevorzugt für 4-12 min, insbesondere bevorzugt ca. 10 min.,
- Kühlung auf 20-60 °C, bevorzugt auf ca. 45 °C,
- kaltaseptische Zugabe und Einmischung von Komponente B
- Kühlung auf 20-45 °C bevorzugt auf unter 30 °C
- Abfüllung in Steriltanks, Sterilcontainer oder aseptische Beutel.

Bezogen auf die fertige Fruchtzubereitung liegt die Komponentenverteilung in Gew.% bevorzugt wie folgt:
Komponente A (asept. Frucht) 20-60 %
Komponente B (Compound) 1-10%
Komponente C (beim Endabnehmer) 35-75%

Für beispielsweise eine Joghurtherstellung wird die fertige Fruchtzubereitung kaltaseptisch mit der Joghurtgrundmasse mit Dosierungen von 5 bis 25 % je nach Fruchtanteil und Qualität ausgemischt und abgefüllt.

Bezogen auf das fertige Endprodukt wie zB ein Molkereiprodukt liegt die Komponentenverteilung in Gew.% bevorzugt wie folgt:
- Komponente A (aseptische Frucht) 1-15%
- Komponente B (Compound) 0,1-1%
- Komponente C (beim Endabnehmer) 35-75%

Die wesentlichen Vorteile des erfindungsgemäßen Verfahrens liegen zum einen in dem separaten Zusammenführen über thermische und kaltaseptische Prozesse der einzelnen Komponenten direkt vor der Weiterverarbeitung der Fruchtzubereitung beispielsweise in einer Molkerei. Bei der Herstellung eines Joghurts werden also aseptische Früchte mit einem Fruchtanteil von mind. 80 % entsprechend der Komponente A zugeliefert. Eine herkömmliche Fruchtzubereitung hat in der Regel nur einen Fruchtanteil von 35 bis 60 %. Die Dosierung der Komponente A im fertigen Joghurt beträgt 1% bis 15 % bevorzugt 5-7%. Des weiteren wird die Komponente B aus Zusatzstoffen zugeliefert. Diese Komponente hat im fertigen Joghurt eine Dosierung von 0,1 % bis 1 %, bevorzugt 0,3-0,6%. Die Komponente C bestehend aus Zucker, Zuckerarten, gegebenenfalls Stabilisatoren und Wasser kann in einfacher Weise von der Molkerei beim günstigsten Anbieter beschafft werden und wird dort erst mit den Komponenten A und B zusammengeführt und anschließend durch herkömmliche Herstellungsverfahren mit der Joghurtgrundmasse vermengt.

Ein weiterer wesentlicher Vorteil ist, dass die Komponente B flexibel für unterschiedliche Kundenwünsche hergestellt werden und somit mit den im Prinzip gleichbleibenden Komponenten A und C in modularer Weise individuell zusammengesetzt werden kann. Besonders vorteilhaft dabei ist, dass die Komponente B, welche im Wesentlichen Farben und Aromen enthält, schonend pasteurisiert wird und kaltaseptisch in den Zubereitungsprozess ohne weitere Erhitzung eingebracht werden kann. Das Einbringen mittels unkontrolliertem Dampfstoß wie im herkömmlichen Verfahren ist somit nicht notwendig. Durch das Konzentrieren der individualisierenden Bestandteile unterschiedlicher Abnehmer in der Komponente B, die in ihrem Volumen weit geringer als die Komponente A oder C ist, ergeben sich große Vorteile in Hinblick auf Herstellungs- und Transportkosten. In einer weiteren bevorzugten Variante der Erfindung kann die eingangs gestellte Aufgabe auch dadurch gelöst werden, dass die Komponenten A, B, und C alle kaltaseptisch direkt in die milchhältige Grundmasse dosiert werden. Dabei muß lediglich die Komponente C separat pasteurisiert werden und in beliebiger Reihenfolge A, B, und C der milchhältigen Grundmasse zudosiert werden. Welche Komponente aus technischen Gründen vorrangig zusammengemischt wird (z.B. A mit B und später C, oder zuerst B mit C und später A) ist im Rahmen dieses neuen Verfahrens nicht relevant. Zum Beispiel werden entweder die getrennt zubereiteten Komponenten A und B kaltaseptisch miteinander vermischt und gemeinsam mit der Komponente C kaltaseptisch der Milchgrundmasse zugemischt, oder es können auch die einzelnen Komponenten A, B und C ohne vorheriges Mischen einzeln dem Produktstrom kaltaseptisch zugemischt werden.

Ein bevorzugtes Verfahren kann beispielhaft wie folgt durchgeführt werden:
- Komponente C, nämlich Zucker, Zuckerarten und Wasser, werden erhitzt,
- Zugabe von Stabilisatoren bei 60°C (meist Stärke E1442), erhitzen auf ca. 82-95°C, bevorzugt bei ca. 90°C,
- Heißhalten 4-12 min, bevorzugt 10 min.,
- Kühlung auf 25-60°C, bevorzugt auf 55°C,
- Kaltaseptische Zugabe und Einmischung von Komponente A (aseptische Früchte),
- Kaltaseptische Einmischung und Zugabe von Komponente B (Compound)
- Kühlung auf 20-45°C, bevorzugt auf unter 30°C,
- Abfüllung in Steriltanks, Sterilcontainer oder aseptische Beutel oder direkte Zuführung zur milchhältigen Grundmasse.

Ein wesentlicher Vorteil des Verfahrens ist, dass die Komponente A mit den aseptischen Fruchtbestandteilen als Grundmodul je Fruchtsorte gleichbleibend in der gleichen Qualität und somit als gleichbleibende Materialposition für alle Artikel mit gleicher Fruchtsorte Verwendung findet. Qualitativ ergibt sich ein weiterer wesentlicher Vorteil dadurch, dass die Komponente A keine weiteren Pasteurisationsschritten unterzogen werden muss, wie dies bei dem zuvor beschriebenen und ebenfalls erfindungsgemäßen Verfahren der Fall ist. Die kaltaseptische Zugabe der Komponente A erhöht eindeutig die Fruchtidentität und die Ausbeute an Fruchtstücken bei Produkten mit geforderter Stückigkeit im Endprodukt.

In der industriellen Praxis wird es vorteilhaft sein, wenn die Komponenten A und B vom Fruchtprodukthersteller angeliefert und die Komponente C mit dem überwiegenden Mengenanteil an Wasser und Zucker beim Endverarbeiter pasteurisiert und dann kaltaseptisch zugeführt wird.

In Tabelle 1 ist als Ausführungsbeispiel einer möglichen Fruchtzubereitung die Zusammensetzung für eine Pfirsich-Maracuja Fruchtzubereitung angeführt. Sämtliche Angaben sind in Gew.% bezogen auf die jeweilige Komponente oder die gesamt Zubereitung angegeben.

Des Weiteren ist die endgültige Konzentration der einzelnen Komponenten in einem Endprodukt, in diesem Fall einem Fruchtjoghurt angeführt. Wie ersichtlich hat die Komponente B den gewichtsmäßig geringsten Anteil, stellt aber in Hinblick auf die Individualität der Fruchtzubereitung die wichtigste Komponente dar. Es besteht also eine hohe Flexibilität dahingehend, dass man die Zusammensetzung der Komponente B für verschiedene Anwendungen modifizieren kann und dabei dennoch die Produktions- und Transportkosten gering hält, da diese Komponente nur in geringen Endkonzentrationen vorliegt.

Im Folgenden werden weitere erfindungsgemäße Ausführungsformen dargestellt.

Die Erfindung umfasst ein Verfahren zur Herstellung einer Fruchtzubereitung, die mindestens drei Komponenten A, B und C umfasst, wobei Komponente A hergestellt wird aus mindestens den Bestandteilen
- Frische Früchte,
- geringfügige Anteile von Wasser,
- gegebenenfalls Zucker oder Stärkehydrolysate,
- gegebenenfalls Ca-Salze und Enzyme zur Fruchthärtung,
- gegebenenfalls Stabilisatoren,
Komponente B hergestellt wird aus mindestens den Bestandteilen
- natürliche oder naturidente Aromen, gegebenenfalls FTNF-Aromen
- Wasser als Lösungsmittel und Trägerstoff,
sowie zumindest einem weiteren Bestandteil ausgewählte aus der Gruppe:
- färbende Lebensmittel und oder Lebensmittelfarbstoffe, Puffersalze, Stabilisatoren, Saftkonzentrate, verschiedene Zuckerarten als Trägerstoff, andere Süßstoffe, wie beispielsweise Aspartam, Acesulfam,
und Komponente C hergestellt wird aus mindestens den Bestandteilen
- Wasser,
- Zuckerarten oder Süßstoffen,
- gegebenenfalls Stabilisatoren,
und das Verfahren folgende Schritte umfasst:
Herstellung der Komponente A:
   - Pasteurisierung der frischen Früchte unter Zusatz von geringfügigen Anteilen an Wasser sowie gegebenenfalls Zucker oder Stärkehydrolysate, Ca-Salze und Enzyme zur Fruchthärtung bei 80°C bis 98°C
   - Kühlung der Komponente A beispielsweise über Schabewärmetauscher oder Röhrenkühler
   - Abfüllung bei einer Temperatur der Komponente A von etwa 20°C bis 40°C.
Herstellung der Komponente B:
   - Schonende Erwärmung der Zutaten, sowie gegebenenfalls Homogenisierung
   - Pasteurisierung bei 75°C bis 95°C, bevorzugt bei etwa 85°C
   - Kühlung auf unter 25°C.

Zusammenführung der Komponenten A, B und C nach folgendem Schema:
- Vermengung der Komponente A und C
- Schonende Erhitzung des Gemisches auf 82-95°C, bevorzugt auf etwa 85°C,
- Halten der Temperatur für 4-12 min, bevorzugt für etwa 10 min
- Kühlung des Gemisches auf 25-60°C, bevorzugt auf etwa 45°C
- Kaltaseptische Zugabe und Vermengung der Komponente B
- Kühlung der Fruchtzubereitung auf 25-45°C, bevorzugt auf unter 30°C.

Die Erfindung umfasst ein Verfahren zur Herstellung einer erfindungsgemäßen Fruchtzubereitung, wobei als Lebensmittelfarbstoff in Komponente B Carminsäure und/oder Carcuma und/oder als färbendes Lebensmittel Rote Beetessaftkonzentrat, schwarzes Karottensaftkonzentrat, Holundersaftkonzentrat, Traubenschalenextrakt und/oder Traubenschalenpulver verwendet wird.

Die Erfindung umfasst ein Verfahren zur Herstellung einer erfindungsgemäßen Fruchtzubereitung, wobei als Puffersalze in Komponente B Trinatriumcitrat und/oder Zitronensäure verwendet werden.

Die Erfindung umfasst ein Verfahren zur Herstellung einer erfindungsgemäßen Fruchtzubereitung, wobei Komponente A einen Fruchtanteil von mindestens 80% aufweist.

Die Erfindung umfasst ein Verfahren zur Herstellung einer erfindungsgemäßen Fruchtzubereitung, wobei die Herstellung der Komponente C folgende Schritte umfasst:
- Zucker, gegebenenfalls Saccharose verschiedene Zuckerarten, und Wasser werden erhitzt
- Stabilisatoren werden zugeführt, bevorzugt bei etwa 60°C
- Erhitzen der Mischung auf etwa 80°C bis 99°C, bevorzugt bei etwa 90°C
- Heißhalten auf Pasteurisierungstemperatur, bevorzugt für etwa 10 min
- Kühlung der Mischung C auf 20°C bis 60°C
- Kaltaseptische Abfüllung im Behälter oder Weiterleitung zum Produktstrom des Endverarbeiters.

Die Erfindung umfasst ein Verfahren zur Herstellung einer erfindungsgemäßen Fruchtzubereitung mit Komponenten A, B und C, wobei der pasteurisierten Komponente C die Komponente A und die Komponente B kaltaseptisch zugegeben und eingemischt werden und dass bei einer Temperatur von 20°C bis 45°C, bevorzugt unter 30°C die Fruchtzubereitung im Behälter abgefüllt oder dem Produktstrom des Endverarbeiters zugemischt wird.

Die Erfindung umfasst ein Verfahren zur Herstellung einer erfindungsgemäßen Fruchtzubereitung, wobei die der Komponente zugeführten Stabilisatoren ein Stärkeprodukt oder Guar, oder Johannisbrotkernmehl oder Xanthan oder Mischungen davon sind.

Die Erfindung umfasst ein Verfahren zur Herstellung von Milchmischprodukten mit Früchten wie Fruchtjoghurt, Joghurtgetränk, Molkegetränk und dergleichen, wobei die Komponenten A und B kaltaseptisch vermischt und dann gemeinsam mit der Komponente C der Milchgrundmasse zugemischt werden.

Die Erfindung umfasst ein Verfahren zur Herstellung von Milchmischprodukten mit Früchten wie Fruchtjoghurt, Joghurtgetränk, Molkegetränk und dergleichen, wobei die Komponenten A und C oder B und C kaltaseptisch vermischt und dann mit der restlichen Komponente B oder A separat der Milchgrundmasse zugemischt werden.

Die Erfindung umfasst ein Verfahren zur Herstellung von Milchmischprodukten mit Früchten wie Fruchtjoghurt, Joghurtgetränk, Molkegetränk und dergleichen, wobei die Komponenten A, B und C separat der Milchgrundmasse zugemischt werden.

**Tabelle 1**

| **A** | | **B** | | **GESAMTFRUCHTZUBEREITUNG** | |
|---|---|---|---|---|---|
| **Aseptische Frucht** | | **COMPOUND** | | **Molkerei** | |
| **Pfirsich aseptisch** | **Gew.%** | **Pfirsich Maracuja Compound** | **Gew.%** | **Pfirsich-Maracuja Joghurt mit Stückchen** | **Gew.%** |
| | | | | Komponente C: | |
| Pfirsichwürfel frisch | 90% | Passionsfruchtsaftkonzentrat. | 15,82% | Wasser | 10,10% |
| Zuckerlösung 70 °Brix | 5% | Wasser | 21,20% | Zucker | 31,30% |
| Ascorbinsäure max. | 0,05% | Zitronensäure | 3,16% | Stärke E 1442 HP | 3,60% |
| Zitronensäure max. | 0,10% | Trinatrium-Citrat | 3,16% | Glucosesirup Brix 83° | 15,00% |
| Wasser | 4,85% | Karottensaftkonzentrat | 1,27% | Komponente A | 38,00% |
| Summe | 100% | Wasser | 4,75% | Komponente B | 2,00% |
| | | Aroma Pfirsich Maracuja | 50,63% | Summe | 100,00% |
| | | Summe | 100,00% | | |

| Dosierung im Joghurt | | | | | |
|---|---|---|---|---|---|
| A | 6,84% | | | | |
| B | 0,36% | | | | |
| C | 10,80% | | | | |
| Gesamtfruchtzubereitung | 18,00% | | | | |

Die Tabellen 2 und 3 zeigen weitere Ausführungsbeispiele für eine Erdbeerfruchtzubereitung sowie für eine Ananasfruchtzubereitung.

**Tabelle 2**

| A | | B | | GESAMTFRUCHTZUBEREITUNG | |
|---|---|---|---|---|---|
| **Erdbeere aseptisch** | **Gew.%** | **Erdbeer Compound** | **Gew.%** | **Erdbeerjoghurt mit Stücken** | **Gew.%** |
| | | | | Komponente C: | |
| Erdbeerwürfel frisch | 90% | Wasser | 9,87% | Wasser | 32,50% |
| Zuckerlösung 70°Brix | 5% | Trinatrium-Citrat | 2,68% | Zucker | 18,00% |
| Ascorbinsäure max. | 0,30% | Zitronensäure | 5,36% | Johannisbrotkernmehl | 0,30% |
| Zitronensäure max. | 0,30% | Erdbeersaftkonzentrat | 26,82% | Stärke E 1442 HP | 3,70% |
| Enzym zur Fruchthärtung (Novoshape) | 0,70% | Aroma Erdbeer Silesia 1223 | 40,24% | Glucosesirup Brix 83° | 15,00% |
| Ca-lactat | 1,00% | Kalium-Sorbat | 0,54% | Komponente A | 28,00% |
| Wasser | 2,70% | Karottensaftkonzentrat Schwarz | 8,58% | Komponente B | 2,50% |
| Gesamt | 100% | Rote Beete Saftkonzentrat | 5,90% | Gesamt | 100% |
| | | Gesamt | 100,00% | | |
| Dosierung im Joghurt | | | | | |
| A | 5,04% | | | | |
| B | 0,45% | | | | |
| C | 12,51% | | | | |
| Gesamtfruchtzubereitung | 18,00% | | | | |

**Tabelle 3**

| C | | B | | GESAMTFRUCHTZUBEREITUNG | |
|---|---|---|---|---|---|
| **Ananaspüreekonzentrat aseptisch 30°Brix** | **Gew.%** | **Ananas Drink Diät Compound** | **Gew.%** | **Ananas Drink Diät Joghurt** | **Gew.%** |
| Ananas frisch | | | | Komponente C: | |
| ergibt Ananaspüree konzentriert | 400% | Ananas Saftkonzentrat 60° | 34,50% | Fructose flüssig | 7,00% |
| Wasser. | 95,0% | Wasser | 47,92% | Wasser | 63,33% |
| Ascorbinsäure max. | 4,85% | Curcuma Farbe Gelb | 0,48% | Stärke E 1442 HP | 3,70% |
| Zitronensäure max. | 0,05% | Zitronensäure | 3,59% | Wasser | 6,00% |
| Gesamt | 0,10% | Aspartame | 2,28% | Komponente A | 15,80% |
| | 100% | Acesulfam K | 2,28% | Komponente B | 4,17% |
| | | Aroma Ananas Naturident | 8,96% | Gesamt | 100% |
| | | Gesamt | 100,00% | | |
| Dosierung im Joghurt | | | | | |
| A | 1,89% | | | | |
| B | 0,50% | | | | |
| C | 9,61% | | | | |
| Gesamtfruchtzubereitung | 12,00% | | | | |

## Patentansprüche

1. Verfahren zur Herstellung eines Milchmischproduktes umfassend eine Milchgrundmasse und eine Fruchtzubereitung, **dadurch gekennzeichnet, dass** die Fruchtzubereitung mindestens drei Komponenten A, B und C umfasst, wobei Komponente A hergestellt wird aus mindestens den Bestandteilen
- Frische Früchte
- geringfügige Anteile von Wasser,
- gegebenenfalls Zucker oder Stärkehydrolysate,
- gegebenenfalls Ca-Salze und Enzyme zur Fruchthärtung,
- gegebenenfalls Stabilisatoren,
Komponente B hergestellt wird aus mindestens den Bestandteilen
- natürliche oder naturidente Aromen, gegebenenfalls FTNF-Aromen,
- Wasser als Lösungsmittel und Trägerstoff,
sowie zumindest einem weiteren Bestandteil, ausgewählt aus der Gruppe:
- färbende Lebensmittel und/oder Lebensmittelfarbstoffe, Puffersalze, Stabilisatoren, Saftkonzentrate, verschiedene Zuckerarten als Trägerstoff, andere Süßstoffe, wie beispielsweise Aspartam, Acesulfam,
und Komponente C hergestellt wird aus mindestens den Bestandteilen
- Wasser
- Zuckerarten oder Süßstoffen,
- Gegebenenfalls Stabilisatoren,
und das Verfahren folgende Schritte umfasst:
Herstellung der Komponente A:
- Pasteurisierung der frischen Früchte unter Zusatz von geringfügigen Anteilen an Wasser sowie gegebenenfalls Zucker oder Stärkehydrolysate, Ca-Salze und Enzyme zur Fruchthärtung bei 80°C bis 98°C,
- Kühlung der Komponente A beispielsweise über Schabewärmetauscher oder Röhrenkühler,
- Abfüllung bei einer Temperatur der Komponente A von etwa 20°C bis 40°C; Herstellung der Komponente B:
- Schonende Erwärmung der Zutaten, sowie gegebenenfalls Homogenisierung,
- Pasteurisierung bei 75°C bis 95°C, bevorzugt bei etwa 85°C,
- Kühlung auf unter 25°C;
Kaltaseptische Dosierung der Komponenten A, B und C in die Milchgrundmasse.

2. Verfahren nach Anspruch 1, **dadurch gekennzeichnet, dass** als Lebensmittelfarbstoff in Komponente B Carminsäure und/oder Carcuma und/oder als färbendes Lebensmittel Rote Beetesaftkonzentrat, schwarzes Karottensaftkonzentrat, Holundersaftkonzentrat, Traubenschalenextrakt und/oder Traubenschalenpulver verwendet wird.

3. Verfahren nach einem der Ansprüche 1 oder 2, **dadurch gekennzeichnet, dass** als Puffersalze in Komponente B Trinatriumcitrat und/oder Zitronensäure verwendet werden.

4. Verfahren nach einem der Ansprüche 1 bis 3, **dadurch gekennzeichnet, dass** Komponente A einen Fruchtanteil von mindestens 80% aufweist.

5. Verfahren nach einem der Ansprüche 1 bis 4, **dadurch gekennzeichnet, dass** die Herstellung der Komponente C folgende Schritte umfasst:
- Zucker, gegebenenfalls Saccharose verschiedene Zuckerarten, und Wasser werden erhitzt
- Stabilisatoren werden zugeführt, bevorzugt bei etwa 60°C
- Erhitzen der Mischung auf etwa 80°C bis 99°C, bevorzugt bei etwa 90°C
- Heißhalten auf Pasteurisierungstemperatur, bevorzugt für etwa 10 min
- Kühlung der Mischung C auf 20°C bis 60°C.
- Kaltaseptische Abfüllung im Behälter oder Weiterleitung zum Produktstrom des Endverarbeiters.

6. Verfahren nach einem der Ansprüche 1 bis 5, **dadurch gekennzeichnet, dass** der pasteurisierten Komponente C die Komponente A und die Komponente B kaltaseptisch zugegeben und eingemischt werden und dass bei einer Temperatur von 20°C bis 45°C, bevorzugt unter 30°C die Fruchtzubereitung im Behälter abgefüllt oder der Milchgrundmasse zugemischt wird.

7. Verfahren nach Anspruch 6, **dadurch gekennzeichnet, dass** die der Komponente zugeführten Stabilisatoren ein Stärkeprodukt oder Guar, oder Johannisbrotkernmehl oder Xanthan oder Mischungen davon sind.

8. Verfahren nach einem der Ansprüche 1 bis 7, **dadurch gekennzeichnet, dass** die Komponenten A, B und C getrennt voneinander kaltaseptisch der Milchgrundmasse zugemischt werden.

9. Verfahren nach einem der Ansprüche 1 bis 7, **dadurch gekennzeichnet, dass** die Komponenten A und B kaltaseptisch vermischt und dann gemeinsam mit der Komponenten A und C oder B und C kaltaseptisch vermischt und dann mit der restlichen Komponente B oder A separat der Milchgrundmasse zugemischt werden.

## Claims

1. A method for the manufacture of a mixed milk product comprising a milk matrix and a fruit preparation, **characterized in that** the fruit preparation comprises at least three components A, B and C, wherein component A is produced from at least the constituents
- fresh fruit,
- minor quantities of water,
- optional sugar or starch hydrolysates,
- optional Ca salts and enzymes to harden the fruit,
- optional stabilizers,
component B is produced from at least the constituents
- natural or nature-identical flavours, optionally FTNF flavours,
- water as solvent and carrier,
as well as at least one further constituent selected from the group:
- coloured foodstuffs and/or food colourings, buffer salts, stabilizers, juice concentrates, various types of sugar as carriers, other sweeteners such as, for example, aspartame, acesulfame,
and component C is produced from at least the constituents
- water,
- types of sugar or sweeteners,
- optional stabilizers,
and the method comprises the following steps:
manufacture of component A:
- pasteurization of the fresh fruit with the addition of minor quantities of water as well as optional sugar or starch hydrolysates, Ca salts and enzymes to harden the fruit at 80°C to 98°C,
- cooling the component A, for example by means of a scraped surface heat exchanger or tube exchanger,
- filling at a temperature for component A of approximately 20°C to 40°C;
manufacture of component B:
- gentle heating of ingredients, as well as homogenization if necessary,
- pasteurization at 75°C to 95°C, preferably at approximately 85°C,
- cooling to below 25°C;
cold aseptic filling of components A, B and C into the milk matrix.

2. The method as claimed in claim 1, **characterized in that** the food colouring employed is carminic acid and/or carcuma and/or the colouring foodstuff employed is beetroot juice concentrate, black carrot juice concentrate, elder juice concentrate, grape skin extract and/or grape skin powder.

3. The method as claimed in claim 1 or claim 2, **characterized in that** trisodium citrate and/or citric acid is employed as the buffer salt in component B.

4. The method as claimed in one of claims 1 to 3, **characterized in that** component A has a fruit content of at least 80%.

5. The method as claimed in one of claims 1 to 4, **characterized in that** the manufacture of component C comprises the following steps:
- sugar, optionally saccharose various types of sugar, and water are heated,
- stabilizers are added, preferably at approximately 60°C,
- heating of the mixture to approximately 80°C to 99°C, preferably to approximately 90°C,
- maintaining of the pasteurization temperature, preferably for approximately 10 min,
- cooling of the mixture C to 20°C to 60°C,
- cold aseptic dispensing into the container or forward transfer to the product stream of the end producer.

6. The method as claimed in one of claims 1 to 5, **characterized in that** component A and component B are added to the pasteurized component C cold aseptically and mixed together and **in that** the fruit preparation is dispensed into the container or mixed with the milk matrix at a temperature of 20°C to 45°C, preferably below 30°C.

7. The method as claimed in claim 6, **characterized in that** the stabilizers added to the components are a starch product or guar, or carob bean gum or xanthan or mixtures thereof.

8. The method as claimed in one of claims 1 to 7, **characterized in that** the components A, B and C are mixed cold aseptically into the milk matrix separately from each other.

9. The method as claimed in one of claims 1 to 7, **characterized in that** the components A and B are separately mixed up cold aseptically and then the components A and C or B and C are mixed up together cold aseptically and are then separately mixed into the milk matrix with the remaining component, component B or A.

## Revendications

1. Procédé destiné à préparer un produit mixte à base de lait, comprenant une masse de base au lait et une préparation aux fruits, **caractérisé en ce que** la préparation aux fruits comprend au moins trois composants, A, B et C, le composant A étant fabriqué à partir d'au moins les ingrédients :
- fruits frais,
- de faibles parts d'eau,
- le cas échéant, du sucre ou des hydrolysats d'amidon,
- le cas échéant, des sels de Ca et des enzymes pour le durcissement des fruits,
- le cas échéant, des stabilisateurs,
le composant B étant fabriqué à partir d'au moins les ingrédients
- des arômes naturels ou analogues, le cas échéant, des arômes FTNF,
- de l'eau, en guise de solvant et une substance de support,
ainsi qu'au moins un ingrédient supplémentaire, choisi dans le groupe :
- des produits alimentaires colorants et/ou des colorants alimentaires, des sels tampons, des stabilisateurs, des concentrés de jus, de différents types de sucres en guise de substance de support, d'autres édulcorants, comme par exemple de l'aspartame, de l'acésulfame,
et le composant C étant fabriqué à partir d'au moins les ingrédients :
- de l'eau,
- des types de sucres ou des édulcorants,
- le cas échéant, des stabilisateurs
et le procédé comprenant les étapes suivantes :
Préparation du composant A :
- pasteurisation des fruits frais en ajoutant de faibles parts d'eau, ainsi que le cas échéant du sucre ou des hydrolysats d'amidon, des sels de Ca et des enzymes pour le durcissement des fruits à de 80 °C à 98 °C,
- refroidissement du composant A, par exemple via un échangeur thermique à surface raclée ou un réfrigérant tubulaire,
- remplissage à une température du composant A d'environ de 20 °C à 40 °C ;
Fabrication du composant B :
- échauffement préservateur des ingrédients, ainsi que le cas échéant, homogénéisation,
- pasteurisation à de 75 °C à 95 °C, de préférence à environ 85 °C,
- refroidissement à moins de 25 °C ;
dosage aseptique à froid des composants A, B et C dans la masse de base au lait.

2. Procédé selon la revendication 1, **caractérisé en ce qu'**en tant que colorant alimentaire dans le composant B, on utilise de l'acide carminique et/ou du carcuma et/ou en guise de produits alimentaires colorants, on utilise du jus de raves rouges concentré, du jus de carottes noires concentré, du jus de sureau noir concentré, de l'extrait de peau de raisin et/ou de la poudre de peau de raisin.

3. Procédé selon l'une quelconque des revendications 1 ou 2, **caractérisé en ce qu'**on utilise en tant que sels tampons dans le composant B du citrate de tri-sodium et/ou de l'acide citrique.

4. Procédé selon l'une quelconque des revendications 1 à 3, **caractérisé en ce que** le composant A comporte une part en fruits d'au moins 80 %.

5. Procédé selon l'une quelconque des revendications 1 à 4, **caractérisé en ce que** la fabrication du composant C comprend les étapes suivantes :
- on fait chauffer le sucre, le cas échéant le saccharose de différents types de sucres et de l'eau,
- on ajoute les stabilisateurs, de préférence à environ 60 °C,
- on fait chauffer le mélange à environ de 80 °C à 99 °C, de préférence à environ 90 °C,
- on le maintient au chaud, à la température de pasteurisation, de préférence pour environ 10 mn,
- on fait refroidir le mélange C à de 20 °C à 60 °C,
- on procède au remplissage aseptique à froid dans le récipient ou on le retransmet vers le flux de produit du transformateur final.

6. Procédé selon l'une quelconque des revendications 1 à 5, caractérisé on ce qu'on ajoute sous aseptisation à froid le composant C pasteurisé, le composant A et le composant B et on les mélange et en ce qu'à une température de 20 °C à 45 °C, de préférence de 30 °C, on procède au remplissage de la préparation aux fruits dans le récipient ou à son mélange à la masse de base au lait.

7. Procédé selon la revendication 6, **caractérisé en ce que** les stabilisateurs alimentés au composant sont un produit d'amidon ou du guar ou de la farine de caroube ou de xanthane ou des mélanges de ces derniers.

8. Procédé selon l'une quelconque des revendications 1 à 7, **caractérisé en ce qu'**on mélange sous aseptisation à froid les composants A, B et C séparément à la masse de base au lait.

9. Procédé selon l'une quelconque des revendications 1 à 7, **caractérisé en ce qu'**on mélange les composants A et B sous aseptisation à froid et on les mélange ensuite en commun avec les composants A et C ou B et C sous aseptisation à froid et ensuite on les mélange séparément avec le composant B ou A restant à la masse de base au lait.
